# EUROPÄISCHE PATENTANMELDUNG

(11) **EP 4 679 022 A1**
(43) Veröffentlichungstag der Anmeldung: **14.01.2026**
(21) Anmeldenummer: 25187040.8
(22) Anmeldetag: 02.07.2025
(51) Int. Cl.: F28D 7/10, F28F 1/00, F28F 13/00

(54) **SICHERHEITSWÄRMETAUSCHER UND VERFAHREN ZUR HERSTELLUNG EINES SICHERHEITSWÄRMETAUSCHERS**

(30) Priorität: 08.07.2024 DE 102024119372
(71) Anmelder: Kelvion Machine Cooling Systems GmbH, 44625 Herne (DE)
(72) Erfinder: Ziegler, Stefan, 45549 Sprockhövel (DE)
(74) Vertreter: Griepenstroh, Jörg

(57) **Zusammenfassung**

Die Erfindung betrifft einen Sicherheitswärmetauscher 1 mit einem ersten Strömungskanal 2 für ein erstes Medium und mit einem zweiten Strömungskanal 3 für ein zweites Medium, wobei die beiden Strömungskanäle 2, 3 durch eine Doppelwand 7 voneinander getrennt sind, wobei die Doppelwand 7 eine erste Wand 8 und eine zweite Wand 9 aufweist, die zwischen sich einen Leckageraum 11 begrenzen, wobei in dem Leckageraum 11 ein offenporiger Metallschaum 12 angeordnet ist, der mit beiden Wänden 8, 9 in Kontakt steht.

## Beschreibung

Die Erfindung betrifft einen Sicherheitswärmetauscher mit den Merkmalen des Patentanspruchs 1 sowie ein Verfahren zur Herstellung eines Sicherheitswärmetauschers mit den Merkmalen des Patentanspruchs 7.

Wärmetauscher/Wärmeübertrager haben die Aufgabe, eine thermische Kopplung zwischen einem Primärkreislauf und einem Sekundärkreislauf vorzunehmen, ohne dass ein Medienaustausch stattfindet. In Wärmetauschern kann es allerdings durch Materialermüdung, Druckschwankungen oder Druckschläge sowie durch wechselnde thermische Belastungen zu Schäden an der Struktur kommen, z.B. in Form von Platten- bzw. Rohrbrüchen. Um eine Kontaminierung im Primär- oder Sekundärkreislauf zu vermeiden, kommen Sicherheitswärmetauscher zum Einsatz, die doppelwandig ausgeführt sind. Die Doppelwand begrenzt einen Leckageraum, der überwacht wird, beispielsweise durch einen Druckanzeiger. Nachteilig bei dieser Bauweise ist, dass der Leckageraum üblicherweise mit einem Gas befüllt ist, wobei Gase eine wesentlich niedrigere Wärmeleitfähigkeit haben als Metalle und geradezu als Isolator wirken. Daher werden z.B. benachbarte Platten eines Plattenwärmetauschers auch im Leckageraum teilweise in metallischen Kontakt gebracht. Das Verlöten führt allerdings zu Gefügeveränderungen und ggf. zur Bildung von Schwachstellen. Ohne eine Verbindung der benachbarten Platten würden sich die Platten allerdings unter dem Druck der Medien verformen. An den Verbindungstellen kann allerdings keine Leckage detektiert werden, so dass die durch Verbindungsstellen belegte Fläche auch nicht zu groß sein darf. Im Ergebnis besteht ein Zielkonflikt zwischen der angestrebten hohen Sicherheit gegen Kontaminierung der Medien einerseits und einem guten Wärmeübergang und hoher Belastbarkeit andererseits.

Der Erfindung liegt die Aufgabe zugrunde, einen Sicherheitswärmetauscher aufzuzeigen, der einen verbesserten Wärmeübergang bei gleichzeitig hoher Betriebssicherheit ermöglicht. Ferner soll ein Verfahren zur Herstellung eines solchen Sicherheitswärmetauschers aufgezeigt werden.

Die Erfindung löst diese Aufgaben durch einen Sicherheitswärmetauscher mit den Merkmalen des Patentanspruches 1 und durch ein Verfahren zur Herstellung eines Sicherheitswärmetauschers mit den Merkmalen des Patentanspruches 7. Die jeweiligen Unteransprüchen betreffen vorteilhafte Weiterbildungen der Erfindung.

Der erfindungsgemäße Sicherheitswärmetauscher besitzt einen ersten Strömungskanal für ein erstes Medium und einen zweiten Strömungskanal für ein zweites Medium. Beide Strömungskanäle sind durch eine Doppelwand voneinander getrennt. Die Doppelwand besitzt eine erste und eine zweite Wand, wobei die beiden Wände zwischen sich einen Leckageraum begrenzen. Die Erfindung sieht vor, dass in dem Leckageraum ein offenporiger Metallschaum angeordnet ist, der mit beiden Wänden in Kontakt steht.

Der offenporige Metallschaum soll die beiden Wände miteinander verbinden und dient zur Wärmeübertragung. Der offenporige Metallschaum ist geeignet, den Wärmeübergang signifikant zu verbessern, da er eine große Oberfläche besitzt, die mit den Wänden in Kontakt kommt. Die Funktion des Leckageraums besteht darin, die Medien im Falle eines Defekts einer der Wände voneinander getrennt zu halten und darin, die Möglichkeit zu schaffen, die Leckage zu erkennen. Die Erkennung kann im einfachsten Falle durch eine Sichtprüfung erfolgen, indem überprüft wird, ob ein Medium aus dem Leckageraum austritt, beispielsweise ob eine Flüssigkeit bei einem Plattenwärmetauscher mit vertikal angeordneten Platten unten austritt. Alternativ kann ein im Leckageraum herrschende Parameter überwacht werden, insbesondere der Druck. Steigt der Druck im Leckageraum auf den Druck des ersten oder zweiten Mediums an, liegt eine Leckage zum ersten oder zweiten Medium vor.

Der Metallschaum ist offenporig, damit im Leckagefall das Medium bei einer Sichtprüfung detektiert werden kann oder damit ein Druckanstieg detektiert werden kann. Der Metallschaum weist eine derart offenporige Struktur auf, dass zumindest ein Teil der Poren des Metallschaums an einer entfernt von einer Leckageprüfposition angeordneten Seite des Wärmetauschers mit zumindest einem Teil der Poren angrenzend zur Leckageprüfposition kommuniziert.

Der offenporige Metallschaum erhöht den Metallanteil innerhalb des Leckageraums und verbessert den Wärmeübergang signifikant. Geht man davon aus, dass bei Plattenwärmetauschern z.B. 50 % der Fläche einer Wand durch Löten mit der anderen Wand metallisch verbunden sind, ist zwar der Wärmeübergang in diesen 50 % der Fläche sehr gut, allerdings kann eine Leckage in diesen 50 % der Fläche nur dann detektiert werden, wenn die Leckage in den nicht durch Löten verbundenen Bereich durchbricht. Die Leckage wird erst spät erkannt.

Ein offenporiger Metallschaum ist erfindungsgemäß vorzugsweise überwiegend, d.h. zu mehr als 50 % mit den beiden Wänden verbunden, so dass ein Wärmeübergang durch metallischen Kontakt auf über 50 % der Fläche erfolgt. Gleichzeitig ist die Struktur des Schaums filigraner als großflächige Lötkontaktstellen. Bei entsprechender Feinporigkeit des Metallschaums können Leckagen früher ermittelt werden als bei Wänden, die bereichsweise miteinander verlötet sind. Ein weiterer Vorteil ist, dass die Wände bzw. Platten bei der Verwendung eines Metallschaums nicht mehr oder nicht mehr so stark profiliert werden müssen, sondern überwiegend glatt ausgeführt werden. Der Fertigungsaufwand zur Herstellung der Wände ist geringer.

In vorteilhafter Weiterbildung der Erfindung besitzt der Metallschaum eine maximale Porengröße, die kleiner ist als der Abstand der beiden Wände. Bei Poren, deren maximaler Porendurchmesser größer ist der Abstand der beiden Wände, könnte ein höherer lokaler Gasanteil im Leckageraum vorhanden sein und die Wärmeübertragung wäre weniger homogen, was nicht nur negativ für den Wirkungsgrad ist, sondern auch thermische Spannungen innerhalb der einzelnen Wände erzeugen könnte. Der maximale Porendurchmesser liegt vorzugsweise in einem Bereich unter 80% insbesondere unter 50% des Abstandes der beiden Wände. Wenn der Abstand der Wände variiert, ist der größte Abstand der Wände maßgeblich.

Der Sicherheitswärmetauscher kann als Doppelrohr-Sicherheitswärmetauscher oder als Platten-Sicherheitswärmetauscher ausgeführt sein. Bei Doppelrohr-Sicherheitswärmetauschern wird ein doppelwandiges Innenrohr innerhalb eines Außenrohrs angeordnet. Die Doppelwand ist zylinderförmig. Die Zylinderform erlaubt es, das innere Rohr aufzuweiten, so dass auch ohne stoffschlüssige Verbindung ein guter thermischer Kontakt herstellt werden kann.

Bei Platten-Sicherheitswärmetauschern kommen in der Regel geprägte Doppelplatten zum Einsatz, die an ihren Kontaktstellen thermisch leitend in Kontakt stehen und insbesondere stoffschlüssig miteinander verbunden sind, insbesondere verlötet sind. Es kann sich bei der Doppelwand auch um Wände eines gedichteten oder geschraubten Plattenwärmetauschers handeln. Gedichtete Plattenwärmetauscher besitzen verbesserte Reinigungsmöglichkeiten, weil die Wärmetauscherplatten nicht stoffschlüssig miteinander verbunden sind.

Die Vorteile der Erfindung kommen nicht nur dann zum Tragen, wenn in dem Leckageraum ausschließlich ein offenporiger Metallschaum angeordnet ist, sondern auch dann, wenn die erste und/oder die zweite Wand Vorsprünge aufweist, über welche die beiden Wände in metallischem Kontakt stehen, wobei der Metallschaum in zwischen den benachbarten Vorsprüngen angeordnet ist. Das bedeutet, dass herkömmliche Sicherheitswärmetauscher, sei es in Form eines Doppel-Sicherheitswärmetauschers oder als Platten-Sicherheitswärmetauscher, durch offenporige Metallschäume im Leckageraum optimiert werden können. Wenn man beispielsweise bei Platten-Wärmetauschern davon ausgeht, dass 50 % der Fläche der Wände durch unmittelbaren Kontakt oder stoffschlüssig, z.B. durch Verlöten der Vorsprünge mit der anderen Wand miteinander verbunden sind, trägt ein zusätzlicher Metallschaum in den Bereichen zwischen den Vorsprüngen zu einer signifikanten Erhöhung des Metallanteils im Leckageraum bei, so dass der Wärmeübergang ebenfalls signifikant verbessert wird. Unabhängig davon, ob Vorsprünge zwischen der ersten und zweiten Wand angeordnet sind, soll das Volumen des Metallanteils zwischen den beiden Wänden vorzugsweise in einem Bereich von über 50 bis 95 % liegen, insbesondere in einem Bereich von 60 bis 90 % liegen. Vorzugsweise liegt das Volumen des Metallanteils in einem Bereich von 80 bis 90 %. Das heißt im Umkehrschluss, dass der Volumenanteil der Poren vorzugsweise kleiner als 40 %, insbesondere vorzugsweise kleiner als 15 % ist und dass dadurch die thermische Leitfähigkeit wesentlich besser ist als bei Sicherheitswärmetauscher mit geringerem Metallanteil in dem Leckageraum. Im Gegensatz zu anderen Anwendungsfällen von Metallschäumen ist hier nicht die Gewichtsersparnis durch die Poren wichtig, sondern die Tatsache, dass der Metallschaum zur thermischen Verbesserung eingesetzt wird, ohne dass er aufgrund seiner größeren Oberfläche angeströmt wird. Es kommt aus thermischer Sicht nicht auf die Poren an, sondern auf die Stege zwischen den Poren, welche die Wände thermisch und mechanisch miteinander verbinden. Aus sicherheitstechnischer Sicht sollten die Poren gleichmäßig verteilt sein, damit alle Bereiche des Leckageraums sicher überwacht werden können.

Die Volumenangaben des Metallanteils beziehen sich sowohl auf Ausführungsformen, bei denen ausschließlich ein offenporiger Metallschaum in dem Leckageraum angeordnet ist als auch auf Leckageräume, die zusätzlich von Vorsprüngen der einen oder anderen Wand durchsetzt sind.

Es kann bei Doppelrohr-Sicherheitswärmetauschern vorgesehen sein, dass das Innenrohr bzw. die erste Wand nach außen weisende Rippen oder Vorsprünge aufweist. Auch ist es möglich, als Innenrohr ein Glattrohr zu verwenden, das mit einem innen profilierten äußeren Rohr kombiniert wird, das über das Glattrohr geführt wird. Die Profilierung des äußeren Rohrs steht in diesem Fall in metallischem Kontakt mit dem Innenrohr, um den Wärmeübergang zu verbessern. Die Bereiche zwischen der Profilierung können mit dem Metallschaum gefüllt werden. Das Herstellverfahren wird nachfolgend erläutert.

Zur Herstellung eines Sicherheitswärmetauschers ist es vorgesehen, dass zunächst eine Doppelwand zwischen zwei Strömungskanälen bereitgestellt wird, sei es in Form einer Doppelwand bei einem Doppelrohr-Sicherheitswärmetauscher oder in der Bauform als Platten-Sicherheitswärmetauscher. Die Doppelwand begrenzt mit ihrer ersten und zweiten Wand einen spaltförmigen Leckageraum. In diesen Leckageraum wird ein offenporiger Metallschaum eingebracht, der mit beiden Wänden in Kontakt steht. Das Einbringen eines Metallschaums ist vergleichsweise einfach. In einer ersten Ausführungsform wird eine fließfähige Metallpartikel-Paste, z.B. ein Metall-Füllstoff-Gemisch eingebracht, die den Leckageraum ausfüllt. Im nächsten Schritt werden Poren in der Metallpartikel-Paste durch eine thermische oder chemische Behandlung hergestellt. Eine thermische Behandlung kann beispielsweise vorsehen, dass ein porenbildendes Treibmittel ein Aufschäumen der Metallmatrix bewirkt und dadurch die Porenstruktur ausbildet. Ein Lösemittel kann zur chemischen Entfernung von Nicht-Metall-Anteilen aus der Metallpartikel-Paste, bzw. aus dem Metallschaum verwendet werden. Füllstoffe der Paste können ausgeschmolzen werden oder chemisch ausgetragen werden. Im zweiten Schritt kann die verbleibende Metallmatrix gesintert und gehärtet werden. Gleichzeitig werden dabei die aneinander benachbarten Platten miteinander verbunden.

Bei einer fließfähigen Metallpartikel-Paste mit einem Füllstoff kommt insbesondere ein Füllstoff zum Einsatz bzw. eine thermische oder chemische Behandlung des Füllstoffes, mit welcher einer maximale Porengröße des Metallschaums eingestellt wird, die kleiner ist als der Abstand der Wände. Ein feinporiger und dabei gleichzeitig offenporigen Metallschaum bedeutet, dass es viele Stege und Kreuzungen an den Poren gibt, die Wärme übertragen können. Je feiner die Poren sind, desto größer ist der Metallanteil und desto besser ist der Wärmeübergang. Gleichzeitig werden die Wände der Doppelwand miteinander verbunden. Sie werden gegenseitig über den offenporigen Metallschaum abgestützt. Der Metallschaum verhindert gerade bei Platten-Sicherheitswärmetauschern, dass sich die Strömungskanäle bei hohen Drücken in Richtung zum Leckageraum verformen. Ein Aufblähen der Platten wird durch den offenporigen und flächig eingebrachten Metallschaum verhindert. Durch den Metallschaum ist es möglich, die Anzahl stoffschlüssiger Verbindungen zu reduzieren oder komplett auf stoffschlüssige Verbindungen zwischen benachbarten Wänden eines Leckageraums zu verzichten.

In einer alternativen Ausführungsform wird der Metallschaum als Flächenkörper bereitgestellt, z.B. als Folie oder Matte, vergleichbar mit einem offenporigen Filtervlies oder Drahtgewebe. Der Flächenkörper ist vorkonfektioniert. Der Flächenkörper kann eben sein oder eine gewölbte Form haben, z.B. eine Zylindersegment sein oder auch rohrförmig sein. Ein solcher Flächenkörper kann bereits gesintert sein, bevor er in den Leckageraum eingebracht wird. Anschließend kann der Flächenkörper verpresst werden, um die metallische Anlage zu angrenzenden Flächen herzustellen oder zu verbessern. Diese Ausführungsform eignet sich insbesondere zur Verwendung bei gedichteten/geschraubten Sicherheits-Plattenwärmetauschern.

Der Volumenanteil des Metallschaums im Leckageraum wird vorzugsweise auf einen Bereich von 50 bis 95 %, insbesondere auf einen Bereich von 60 bis 90 % eingestellt und liegt vorzugsweise über 85 %.

Als Metall für den Metallschaum eignet sich insbesondere Kupfer oder eine Kupferlegierung. Kupfer besitzt eine sehr hohe Wärmeleitfähigkeit und lässt sich gut verarbeiten. Es kann bei gelöteten Sicherheitswärmetauschern vorteilhaft sein, einen Grundwerkstoff für den Metallschaum zu verwenden, der einen Schmelzpunkt hat, der oberhalb des Schmelzpunktes des Lötmaterials liegt. Wenn das Lötmaterial Kupfer ist, könnten Stahl oder Edelstahl oder anderer Legierungen mit höherem Schmelzpunkt, wie z.B. Ni-Legierungen geeignet sein. Durch die unterschiedlichen Schmelzpunkte wird der Metallschaum beim Löten nicht beschädigt.

Zusammenfassend ist festzustellen, dass Sicherheitswärmetauscher mit einem Metallschaumanteil in den Leckageräumen wesentlich bessere Eigenschaften hinsichtlich des Wärmeübergangs als vergleichbare Bauformen ohne Metallschaum im Leckageraum besitzen, ohne dass die Sicherheit beeinträchtigt wird. Der Metallschaum ist verfahrenstechnisch einfach einbringbar, hoch belastbar, dient zur Schwingungsdämpfung und trägt dazu bei, materialschwächende Lötstellen zwischen benachbarten Platten des Leckageraums zu reduzieren oder gar zu vermeiden. Die Lebensdauer eines Sicherheitswärmetauschers wird verbessert. Eine geeignete Metallpartikel-Paste, bei der ein Metallpulver mit einem Füllmittel oder einem Treibmittel gemischt ist, oder auch eine pulverförmige Mischung, die Metallpartikel enthält und mit einem Füllmittel oder Treibmittel vermischt ist, wird in den Leckageraum eingebracht, insbesondere eingeblasen/eingespritzt/eingepresst wird, kann durch anschließende Erwärmung des Vormaterials extrudiert werden und eine offenporöse Struktur schaffen, die eine sichere Leckagedetektion ermöglicht bei gleichzeitig guter mechanischer und thermischer Stabilität. Alternativ kommen flächige Formkörper zum Einsatz, die insbesondere vorgesintert sind.

Die Erfindung wird nachfolgend anhand von in den Zeichnungen rein schematisch dargestellten Ausführungsbeispielen erläutert. Es zeigt:
- Figur 1: einen Querschnitt durch Strömungskanäle eines Sicherheitswärmetauschers in einer ersten Ausführungsform;
- Figur 2: einen Querschnitt durch Strömungskanäle eines Sicherheitswärmetauschers in einer zweiten Ausführungsform;
- Figur 3: einen Querschnitt durch einen Sicherheitswärmetauscher in Platten-Bauweise in einer weiteren Ausführungsform und
- Figur 4: einen Querschnitt durch einen Sicherheitswärmetauscher in Platten-Bauweise in einer alternativen Ausführungsform.

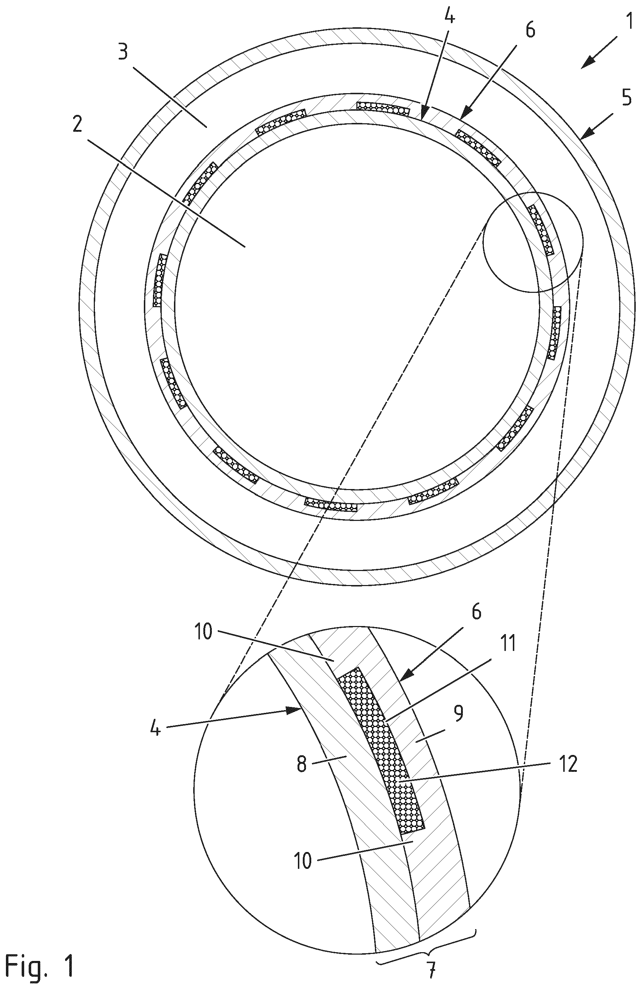

Die Figur 1 zeigt einen Sicherheitswärmetauscher 1 in der Bauform als Doppelrohr-Sicherheitswärmetauscher. Dieser Sicherheitswärmetauscher 1 besitzt einen ersten zentralen Strömungskanal 2 und einen zweiten Strömungskanal 3 für jeweils unterschiedliche Medien, die nicht von dem anderen Medium kontaminiert werden dürfen. Der erste Strömungskanal 2 befindet sich in einem inneren Rohr 4. Der zweite Strömungskanal 3 befindet sich in dem Ringraum zwischen dem inneren Rohr 4 und einem äußeren Rohr 5, welches das innere Rohr 4 im radialen Abstand umgibt. Die beiden Strömungskanäle 2, 3 sind allerdings nicht nur durch das innere Rohr 4 voneinander getrennt, sondern durch ein weiteres Rohr 6, das zwischen dem inneren Rohr 4 und dem äußeren Rohr 5 angeordnet ist. Das innere Rohr 4 und das weitere Rohr 6 bilden zusammen eine Doppelwand 7, wobei das innere Rohr 4 als erste Wand 8 der Doppelwand 7 fungiert und das äußere Rohr 6 als zweite Wand 9 fungiert.

Die Vergrößerung zeigt, dass die erste und zweite Wand 8, 9 der Doppelwand 7 teilweise in unmittelbarem metallischen Kontakt stehen, weil die zweite Wand 9 eine variierende Wanddicke hat. Das äußere Rohr 6 weist mehrere nach innen gerichtete plateauartige Vorsprünge 10 auf. Es handelt sich um Stege, die in Längsrichtung des Rohrs 6 verlaufen. Die Vorsprünge 10 können ergänzend an ihrem radial innen liegenden Bereichen zusätzlich mit der Außenseite des inneren Rohres 4 metallisch verbunden sein, insbesondere verlötet oder anderweitig stoffschlüssig verbunden, oder verpresst oder anderweitig formschlüssig verbunden sein.

Zwischen benachbarten Vorsprüngen 10 befindet sich ein Leckageraum 11, der mit einem offenporigen Metallschaum 12 gefüllt ist. Der offenporige Metallschaum 12 füllt den gesamten Leckageraum 11 aus, so dass er mit beiden Wänden 8, 9 in Kontakt steht. Als Leckageraum 11 wird bei diesem Ausführungsbeispiel nur der mit Metallschaum 12 gefüllte Bereich bezeichnet. Funktional betrachtet gehört auch der von den Vorsprüngen 10 eingenommen Bereich zum Leckageraum, da die Vorsprünge den Spalt zwischen dem inneren Rohr 4 und dem außen benachbarten weiteren Rohr 6 überbrücken.

Der offenporige Metallschaum 12 besitzt bei diesem Ausführungsbeispiel eine gleichmäßige Porenverteilung seiner offenen Poren. Die Poren besitzen jeweils eine maximale Porengröße, die kleiner ist als der in Radialrichtung gemessene Abstand der ersten und zweiten Wand. Die Poren können grundsätzlich gleichmäßig oder ungleichmäßig verteilt sein. Lediglich zur Vereinfachung der Darstellung wurde hier auf eine einheitliche Porengröße zurückgegriffen. Die Poren können auch unterschiedlich groß sein.

Insbesondere ist der Volumenanteil des Metalls des Metallschaums größer als 50 %, insbesondere größer als 60 %, insbesondere größer als 80 % sein. Wenn man den Volumenanteil des Metalls im Leckageraum so verstehen möchte, dass auch Vorsprünge an den Wänden dem Metallanteil zuzurechnen sind, ist der Volumenanteil vorzugsweise größer als 75%, insbesondere größer als 80%.

Der Metallanteil des Metallschaums ist immer kleiner als 100 %. Es müssen hinreichend viele Poren vorhanden sein, um ein erstes oder zweites Medium aus den Strömungskanälen 2, 3 bei einem Durchbruch in den Leckageraum 11 zu detektieren.

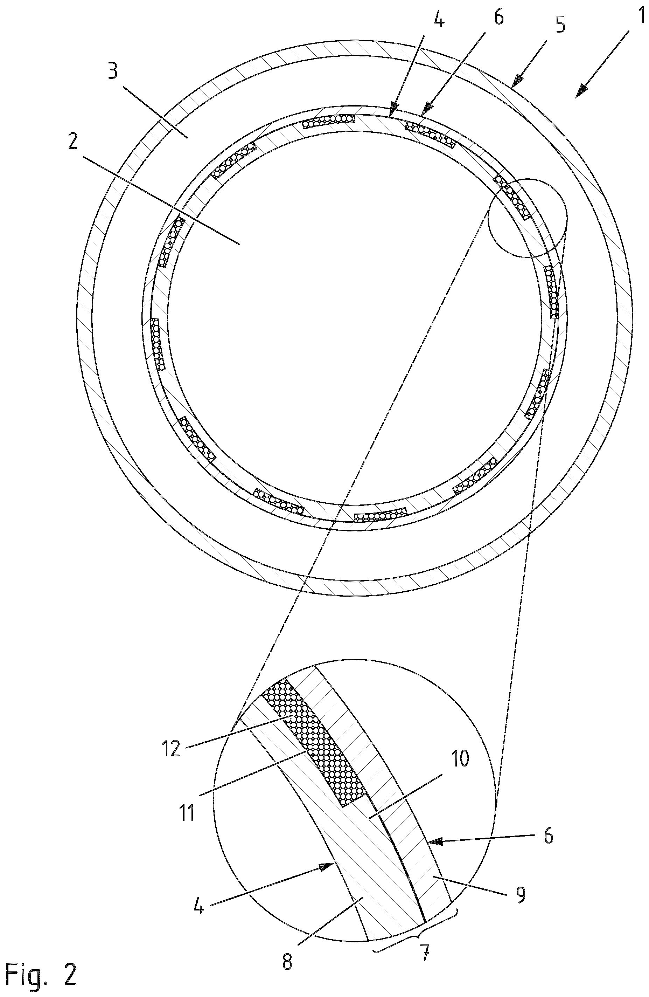

Das Ausführungsbeispiel der Figur 2 unterscheidet sich von dem Ausführungsbeispiel der Figur 1 dadurch, dass die Vorsprünge 10 an dem inneren Rohr 4 angeordnet sind. Daher wird für funktional identische Bauteile auf die Bezugszeichen zurückgegriffen, die zu dem Ausführungsbeispiel der Figur 1 eingeführt worden sind. Das Funktionsprinzip des Sicherheitswärmetauschers der Figur 2 ist identisch zu dem der Figur 1. Ein offenporiger Metallschaum 12 wurde in dem Leckageraum 11 zwischen benachbarten Vorsprüngen 10 angeordnet.

Die Form der Innen- oder Außenprofilierung des inneren Rohrs 4 bzw. des weiteren Rohrs 6 ist rein beispielhaft. Die Erfindung betrifft in gleicher Weise Sicherheitswärmetauscher, bei denen das innere Rohr 4 und das weitere Rohr 6 jeweils Glattrohre sind und einen in Umfangsrichtung ununterbrochenen ringförmigen Leckageraum begrenzen, ohne dass nach innen oder außen ragende Vorsprünge in den Leckageraum ragen.

Die Figuren 1 und 2 zeigen einen Doppelrohr-Sicherheitswärmetauscher mit einem zentralen Rohr. Das Rohr kann Bestandteil einen Zentralrohr-Sicherheitswärmetauschers sein oder auch eines Doppelrohr-Bündels einen Rohrbündel-Wärmtauschers.

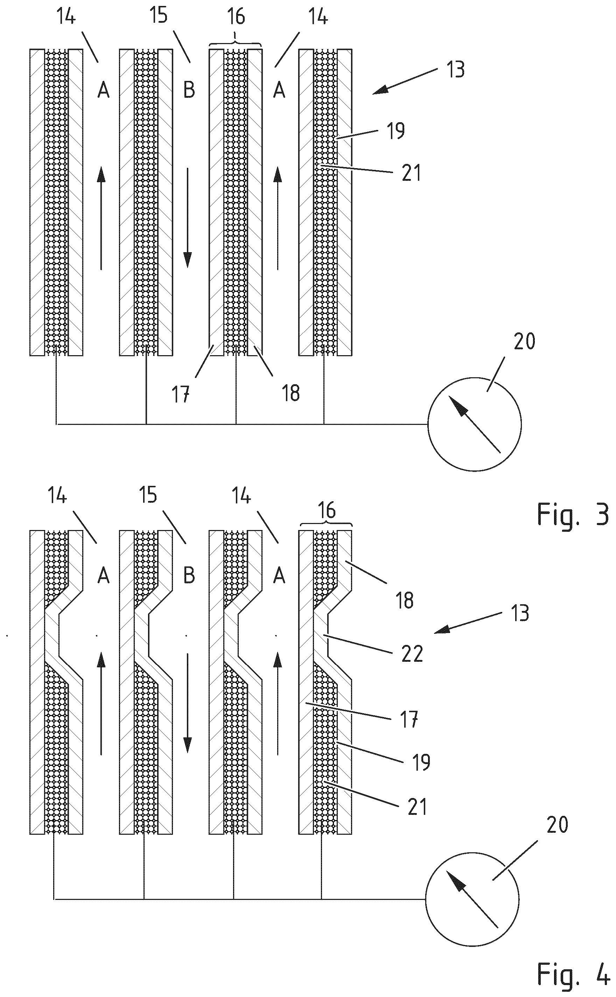

Die Figuren 3 und 4 zeigen eine alternative Ausführungsform eines Sicherheitswärmetauschers 13 in der Bauform als Platten-Sicherheitswärmetauscher. Die Figur 3 zeigt einen Sicherheitswärmetauscher 13 mit einem ersten Strömungskanal 14 für das Medium A und mit einem zweiten Strömungskanal 15 für ein zweites Medium B. In geschichteter Bauweise wiederholt sich diese Anordnung durch abwechselnde erste und zweite Strömungskanäle 14, 15.

Zwischen den benachbarten Strömungskanälen 14, 15 befindet sich eine Doppelwand 16 mit jeweils einer ersten Wand 17 und einer zweiten Wand 18. Die beiden Wände 17, 18 verlaufen parallel zueinander und begrenzen zwischen sich einen Leckageraum 19. Alle Leckageräume 19 sind an einen Druckanzeiger 20 angeschlossen. Bricht das erste Medium A oder das zweite Medium B durch die Doppelwand 16, strömt das jeweilige Medium A oder B in den Leckageraum 19. Es wird ein Druckanstieg am Drucksensor 20 angezeigt.

Die einzelnen Leckageräume 19 sind mit einem offenporigen Metallschaum 21 vollständig ausgefüllt. Der Metallschaum 21 verbindet die beiden Wände 17, 18 der Doppelwand 16 miteinander. Dadurch sind die beiden Wände 17, 18 gegeneinander abgestützt. Der Wärmeübergang im Leckageraum 19 von der ersten Wand 17 zur zweiten Wand 18 wird durch den Metallschaum 21 verbessert. Die Offenporigkeit des Metallschaums 21 ermöglicht es, dass Leckagen über die gesamte Innenfläche des Leckageraums im Bereich der ersten und zweiten Wand 17, 18 detektiert werden können.

Die Bauform der Figur 3 verzichtet auf zusätzliche Vorsprünge an einer der Wände 17, 18. Die Wände 17, 18 stützen sich gegenseitig über den offenporigen Metallschaum 21 gegeneinander ab. Dadurch werden die einzelnen Strömungskanäle 14, 15 stabilisiert.

In der alternativen Ausführungsform gemäß Figur 4 sind an der zweiten Wand 18 jeweils Vorsprünge 22 ausgebildet, über welche die zweite Wand 18 unmittelbar metallisch mit der ersten Wand 17 in Kontakt steht, und zwar ohne Zwischenschaltung eines offenporigen Metallschaums 21. Der Vorsprung 22 befindet sich allerdings nur in einem lokal kleinen Bereich und dient zur Aussteifung der Doppelwand 16. Zwischenräume zwischen den einzelnen Vorsprüngen 22 sind wie bei der Ausführungsform der Figur 3 mit dem offenporigen Metallschaum 21 ausgefüllt.

Auch bei den Figuren 3 und 4 ist die Darstellung des Metallschaums 21 rein exemplarisch. Die maximale Porengröße sollte kleiner als der Abstand der ersten und zweiten Wand 17, 18 sein. Der Metallschaum 19 muss hinsichtlich seiner offenen Poren hinreichend fluiddurchlässig sein, so dass auch eine Leckage im maximalen Abstand von dem Druckanzeiger 20 sicher detektiert werden kann. Der Metallschaum 21 ist keinesfalls dafür vorgesehen, den Leckageraum 19 zu blockieren, sondern ist stets so ausgebildet, dass lokale Druckanstiege sich auf den gesamten, mit Metallschaum 21 ausgefüllten Bereich auswirken, so dass der Druck in allen offenen Poren des Metallschaums 21 gleichmäßig ansteigt oder abfällt. Der Leckageraum 19 kann in regelmäßigen Abständen durch Druckbeaufschlagung einer Prüfung unterzogen werden.

### Bezugszeichen:

- 1 -: Sicherheitswärmetauscher
- 2 -: Erster Strömungskanal
- 3 -: Zweiter Strömungskanal
- 4 -: Inneres Rohr
- 5 -: Äußeres Rohr
- 6 -: Weiteres Rohr
- 7 -: Doppelwand
- 8 -: Erste Wand
- 9 -: Erste Wand von 7
- 10 -: Vorsprung
- 11 -: Leckageraum
- 12 -: Metallschaum
- 13 -: Sicherheitswärmetauscher
- 14 -: Erster Strömungskanal
- 15 -: Zweiter Strömungskanal
- 16 -: Doppelwand
- 17 -: Erste Wand von 16
- 18 -: Zweite Wand von 16
- 19 -: Leckageraum
- 20 -: Druckanzeiger
- 21 -: Metallschaum
- 22 -: Vorsprung

- A -: Erstes Medium
- B -: Zweites Medium

## Patentansprüche

1. Sicherheitswärmetauscher (1, 13) mit einem ersten Strömungskanal (2, 14) für ein erstes Medium (A) und mit einem zweiten Strömungskanal (3, 15) für ein zweites Medium (B), wobei die beiden Strömungskanäle (2, 3; 14, 15 ) durch eine Doppelwand (7, 16) voneinander getrennt sind, wobei die Doppelwand (7, 16) eine erste Wand (8, 17) und eine zweite Wand (9, 18) aufweist, die zwischen sich einen Leckageraum (11, 19) begrenzen, **dadurch gekennzeichnet, dass** in dem Leckageraum (11, 19) ein offenporiger Metallschaum (12, 21) angeordnet ist, der mit beiden Wänden (8, 9, 17, 18) in Kontakt steht.

2. Sicherheitswärmetauscher (1, 13) nach Anspruch 1, **dadurch gekennzeichnet, dass** der Metallschaum (12, 21) eine maximale Porengröße aufweist, die kleiner ist, als der Abstand der beiden Wände (8, 9, 17, 18).

3. Sicherheitswärmetauscher (1, 13) nach Anspruch 1 oder 2, **dadurch gekennzeichnet, dass** er als Doppelrohr-Sicherheitswärmetauscher oder als Platten-Sicherheitswärmetauscher ausgeführt ist.

4. Sicherheitswärmetauscher (1, 13) nach Anspruch 2 oder 3, **dadurch gekennzeichnet, dass** die erste und/oder die zweite Wand (8, 9, 18) Vorsprünge (10, 22) aufweist, über welche die beiden Wände (8, 9, 17, 18) in metallischem Kontakt stehen, wobei der Metallschaum (12, 21) zwischen den Vorsprüngen (10, 22) angeordnet ist.

5. Sicherheitswärmetauscher (1, 13) nach einem der Ansprüche 1 bis 4, **dadurch gekennzeichnet, dass** das Volumen des Metallanteils des Metallschaums (12, 21) zwischen den beiden Wänden (8, 9, 17, 18) in einem Bereich von 50 bis 95% liegt.

6. Sicherheitswärmetauscher (1, 13) nach einem der Ansprüche 1 bis 5, **dadurch gekennzeichnet, dass** das Volumen des Metallanteils des Metallschaums (12, 21) zwischen den beiden Wänden (8, 9, 17, 18) in einem Bereich von 60 bis 90% liegt.

7. Verfahren zur Herstellung eines Sicherheitswärmetauschers (1, 13) mit den Merkmalen nach einem der Ansprüche 1 bis 6, **dadurch gekennzeichnet, dass** eine Doppelwand (7, 16) zwischen zwei Strömungskanälen (2, 3, 14, 15) bereitgestellt wird, wobei die Doppelwand (7, 16) einen Leckageraum (11, 19) begrenzt, wobei in dem Leckageraum (11, 19) zwischen einer ersten Wand (8, 17) und einer zweiten Wand (9, 18) der Doppelwand (7, 16) ein offenporiger Metallschaum (12, 21) angeordnet wird, der mit beiden Wänden (8, 9, 17, 18) in Kontakt steht.

8. Verfahren nach Anspruch 7, **dadurch gekennzeichnet, dass** in den Leckageraum (11, 19) eine fließfähige Metallpartikel-Paste eingebracht wird, wobei die Metallpartikel-Paste gesintert wird, so dass der Metallschaum (12, 21) gebildet wird.

9. Verfahren nach Anspruch 7, **dadurch gekennzeichnet, dass** ein Metallschaum (12, 21) in Gestalt eines Flächenkörpers bereitgestellt wird und in den Leckageraum eingebracht wird.

10. Verfahren nach einem der Ansprüche 7 bis 9, **dadurch gekennzeichnet, dass** die maximale Porengröße des Metallschaums (12, 21) kleiner als der Abstand der Wände (8, 9, 17, 18) eingestellt wird.

11. Verfahren nach einem der Ansprüche 7 bis 10, **dadurch gekennzeichnet, dass** ein Volumenanteil des Metallschaums (12, 21) im Leckageraum (11, 19) in einem Bereich von 50 bis 95%, insbesondere in einem Bereich von 60 bis 90% eingestellt wird.
